# EUROPÄISCHE PATENTSCHRIFT

(11) **EP 1 819 846 B1**
(45) Veröffentlichungstag und Bekanntmachung des Hinweises auf die Patenterteilung: **02.05.2012**
(21) Anmeldenummer: 05816246.2
(22) Anmeldetag: 29.11.2005
(51) Int. Cl.: C23G 5/00, G01N 21/68, G01N 21/71, B08B 7/00

(54) **VERFAHREN ZUM REINIGEN EINES WERKSTÜCKES MIT HALOGENIONEN**
METHOD FOR CLEANING A WORKPIECE WITH HALOGEN IONS
PROCEDE POUR NETTOYER UN PIECE MANUFACTUREE AVEC DES IONS HALOGENURES

(30) Priorität: 10.12.2004 DE 102004061269
(43) Veröffentlichungstag der Anmeldung: 22.08.2007
(73) Patentinhaber: SIEMENS AKTIENGESELLSCHAFT, 80333 München (DE)
(72) Erfinder: KRÜGER, Ursus, 14089 Berlin (DE); PYRITZ, Uwe, 13599 Berlin (DE); SCHIEWE, Heike, 12167 Berlin (DE); ULLRICH, Raymond, 14621 Schönwalde (DE)
(86) Internationale Anmeldenummer: PCT/EP2005/056301
(87) Internationale Veröffentlichungsnummer: WO 2006/061338

(56) Entgegenhaltungen:
- EP-A- 0 233 694
- EP-A- 0 841 682
- EP-A- 1 098 189
- EP-A- 1 559 485
- US-A- 4 098 450
- US-A- 4 405 379
- US-A- 6 088 096
- US-A1- 2002 093 652
- US-A1- 2002 139 925
- US-A1- 2002 157 277
- US-A1- 2003 046 976
- US-A1- 2003 160 956
- US-A1- 2005 078 300
- US-A1- 2005 190 363
- US-B1- 6 367 687

## Beschreibung

Die Erfindung betrifft ein Verfahren zum Reinigen eines Werkstückes von Korrosionsprodukten in einer reaktiven Atmosphäre mit Halogenionen, bei dem das Werkstück in einer Reinigungskammer einem die Halogenionen enthaltenden Prozessgas ausgesetzt wird, wobei das Prozessgas kontinuierlich oder in Zeitintervallen der Reinigungskammer zugeführt und entnommen wird.

Ein solches Verfahren ist beispielsweise der EP 209 307 A1 zu entnehmen. Danach wird als zu reinigendes Werkstück beispielsweise eine Turbinenschaufel, die das Ende der vorgesehenen Lebensdauer erreicht hat, in einer Reinigungskammer befestigt und dieser Reinigungskammer ein Prozessgas zugeführt, welches Halogenionen, insbesondere Fluorionen, enthält. Die dabei einzustellenden Prozessparameter basieren auf Erfahrungswerten, die durch wiederholtes Reinigen von Turbinenschaufeln gesammelt wurden. Gemäß der EP 209 307 A1 kann der Reinigungsprozess in der Kammer beispielsweise bei einer Temperatur von 950°C über eine Reinigungsdauer von 3 Stunden durchgeführt werden.

Der beschriebene Reinigungsprozess eignet sich insbesondere für Werkstücke aus so genannten Superlegierungen, wie sie für Turbinenschaufeln verwendet werden. Diese Werkstücke sind häufig zusätzlich mit Beschichtungen versehen, beispielsweise mit thermischen Schutzschichten, auch Thermal Barrier Cotings (TBC) genannt sowie Korrosionsschutzschichten, die Chrom, Aluminium und Yttrium enthalten und auch als MCrAlY-Schichten bezeichnet werden. Bei.verbrauchten Turbinenschaufeln sind durch Bildung von Korrosionsprodukten auch die genannten Schichten angegriffen, so dass diese bei einer Reinigung ebenfalls entfernt werden müssen. Insbesondere bilden sich aus den Legierungselementen der genannten Schichten und der den Grundwerkstoff bildenden Turbinenschaufel komplexe Carbonat- und Oxidverbindungen, die vom Grundwerkstoff entfernt werden müssen. Hier ist insbesondere das Calcium-Magnesium-Aluminium-Silicium-Oxidsystem (CMAS) zu nennen. Eine weitere Gruppe bilden die thermisch gewachsenen Oxide (TGO). Mittels eines Angriffes von Halogenionen in einer reaktiven Atmosphäre werden die genannten Schichten und Verunreinigungen in flüchtige Substanzen umgebaut, wodurch eine Reinigung der Turbinenschaufel erfolgt. Insbesondere wird dies durch das so genannte Fluorid Ion Cleaning (FIC) bewerkstelligt. Nach Abschluss des Reinigungsvorganges können die Turbinenschaufeln erneut beschichtet und einem weiteren Lebenszyklus zugeführt werden.

Wegen der hohen Komplexität der Verunreinigungen muss der auf Erfahrungswerten beruhende Reinigungsvorgang nach Abschluss der empirisch ermittelten Reinigungszeit durch geeignete Untersuchung am gereinigten Werkstück (Turbinenschaufel) untersucht werden. Auf diese Weise lässt sich sicherstellen, dass eine vollständige Reinigung der Oberfläche erfolgt, da dies eine zwingende Voraussetzung für eine erfolgreiche Neubeschichtung bildet. Eventuell muss der Reinigungsvorgang wiederholt oder verlängert werden.

Gemäß der US 2002/0093652 A1 ist ein Verfahren beschrieben, bei dem ein Reinigungsprozess mit Hilfe einer spektrometrischen Untersuchung eines Plasmas des Reinigungsgases überwacht werden kann. Hierbei geht man davon aus, dass es charakteristische Spektrallinien in dem ermittelten Spektrum gibt, die entweder repräsentativ für das Material sind, welches in der Reaktionskammer bearbeitet wird oder dass das Prozessgas Nebenprodukte der Reaktion enthält, die in der Reaktionskammer stattfindet. Allerdings lässt sich eine solche Überwachung nur durchführen, wenn eine reproduzierbare Gesetzmäßigkeit zwischen diesen Spektrallinien und dem in der Reaktionskammer ablaufenden Prozess vorliegt. Dies ist beispielsweise bei Beschichtungsprozessen von Großserienprodukten der Fall.

Weiterhin ist in der US 2003/0046976 A1 eine spektrometrische Analysezelle beschrieben, die an einen von der Atomsphäre abgeschlossenen Prozess angeschlossen werden kann. Zweck dieser Analyseeinrichtung ist es, die Spektrallinien von Verunreinigungen aus dem Atmosphärengas festzustellen, die auf eine Leckage der Fertigungseinrichtung schließen lassen. In diesen Fällen kann die Produktionsanlage zur Vermeidung von Produktionsfehlern gestoppt werden. Das Analyseergebnis wird zu diesem Zweck mit einem Sollergebnis verglichen, wobei jegliche Abweichung von diesem Sollergebnis auf eine Störung des Prozesses schließen lassen. Daher muss der Prozess mit bekannten und sich nicht verändernden Parametern ablaufen.

Gemäß der US 4,089,450 ist es außerdem bekannt, dass die Oberfläche eines zu behandelnden Werkstückes optisch überwacht werden kann. Dies ist beispielsweise bei der Reinigung von Turbinenschaufeln möglich, um den Reinigungsfortschritt dahingehend zu überwachen, dass das gereinigte Objekt eine bestimmte optische Erscheinungsform aufweist. Sobald diese Erscheinungsform hergestellt ist, lässt dies auf eine Beendigung des Reinigungsvorganges schließen.

Die Aufgabe der Erfindung besteht darin, ein Verfahren zum Reinigen von Werkstücken mit Halogenionen anzugeben, mit dem sich eine vollständige Reinigung der Werkstücke in einer möglichst kurzen Zeit erreichen lässt.

Diese Aufgabe wird mit dem eingangs beschriebenen Verfahren erfindungsgemäß dadurch gelöst, dass zumindest ein Teil des entnommenen Prozessgases einer Analysezelle zugeführt wird, in der Analysezelle mit vorgegebenen Prozessparametern ein Plasma in dem Prozessgas gezündet wird und das Plasma spektrometrisch analysiert wird. Die spektrometrische Analyse des Prozessgases in der beschriebenen Weise ermöglicht vorteilhaft einen direkten Rückschluss auf den Ablauf des in der Reinigungskammer ablaufenden Reinigungsprozesses. Das ermittelte Spektrum kann beispielsweise ein Emissionsspektrum elektromagnetischer Strahlung sein, welches die in dem Plasma befindlichen Bestandteile aussenden. Außerdem ist vorgesehen, dass eine Veränderung des ermittelten Spektrums des Prozessgases mit dem Fortschritt bei der Reinigung eines der Werkstücke korreliert wird, indem sowohl der zeitliche Verlauf der Änderungen des ermittelten Spektrums als auch der an der Oberfläche und/oder in Rissen in der Oberfläche eines der Werkstücke ablaufende Reinigungsprozess überwacht wird. Dann wird diese Korrelation herangezogen, um Charakteristika in den ermittelten Spektren aufzufinden, die einen erfolgreichen Abschluss des Reinigungsvorgangs signalisieren und der Reinigungsprozess wird an den Werkstücken jeweils so lange fortgeführt, bis aufgrund des Fehlens der Spektrallinien der charakteristischen Reinigungsprodukte auf eine vollständige Säuberung des Werkstücks geschlossen werden kann und der Reinigungsprozess dann abgebrochen wird. Es handelt sich bei den Werkstücken um Turbinenschaufeln.

Eine Möglichkeit besteht darin, ein Massenspektrometer an die Analysezelle anzuschließen, mit dem ein Massenspektrum der im Plasma befindlichen Bestandteile ermittelt werden kann. Durch das Plasma in der Analysezelle können zu analysierende Bestandteile weiter aufgespalten werden, so dass bei den ermittelten Massenemissionspektren eine höhere Auflösung erzielt wird.

In jedem Fall erlaubt die Auswertung des spektrometrischen Analyseergebnisses einen Rückschluss auf die Zusammensetzung des in der Analysevorrichtung befindlichen Prozessgases. Diese Zusammensetzung lässt einen weiteren Rückschluss darauf zu, welche Reinigungsprodukte durch den Reinigungsprozess entstehen, so dass der Reinigungsprozess so lange fortgeführt werden kann, bis aufgrund des Fehlens der Spektrallinien der charakteristischen Reinigungsprodukte auf eine vollständige Säuberung des Werkstückes geschlossen werden kann. Nach Eintreten dieses Analyseergebnisses kann der Reinigungsprozess sofort abgebrochen werden.

Bei dem erfindungsgemäßen Verfahren kann die Reinigungszeit vorteilhaft für jedes zu reinigende Werkstück optimiert werden. Ein Rückgriff auf Erfahrungswerte kann dadurch unterbleiben, wodurch einerseits bei Werkstücken, deren Reinigung schneller durchgeführt werden kann, als dies der Erfahrungswert nahe legt, die Reinigungszeit vermindert werden kann und bei Werkstücken, die nach der Reinigungszeit gemäß einem Erfahrungswert noch nicht vollständig gereinigt wären, automatisch die Prozesszeit angepasst werden kann, so dass wiederholte Reinigungsschritte unterbleiben können. Jedes Werkstück wird also in der optimalen Zeit gereinigt, wodurch insgesamt vorteilhaft der Reinigungsprozess wirtschaftlicher wird. Denn bei der Bestimmung eines Erfahrungswertes wäre zusätzlich immer ein Sicherheitszuschlag zur Reinigungszeit notwendig, um auch die Fälle möglichst weitgehend zu erfassen, bei denen eine überdurchschnittlich lange Reinigungszeit notwendig ist.

Die Durchführung des erfindungsgemäßen Verfahrens kann durch die Ermittlung von Erfahrungswerten weiter optimiert werden, die eine richtige Interpretation der ermittelten Spektren zulassen. Zur Ermittlung dieser Erfahrungswerte kann gemäß einer vorteilhaften Ausgestaltung des Verfahrens dieses dazu verwendet werden, um eine Veränderung des ermittelten Spektrums des Prozessgases mit dem Fortschritt bei der Reinigung des Werkstückes zu korrelieren. Dies bedeutet, dass bei dieser Ausgestaltung des Verfahrens sowohl der zeitliche Verlauf der Änderungen in den jeweils ermittelten Spektren als auch der an der Oberfläche des Werkstückes oder auch in eventuellen Rissen des Werkstückes ablaufende Reinigungsprozess überwacht wird. Die Korrelation zwischen diesen beiden Abläufen kann dann interpretiert werden, um eindeutige Charakteristika in den Spektren aufzufinden, die einen erfolgreichen Abschluss des Reinigungsvorganges signalisieren. Zum Zwecke der Interpretation ist es vorteilhaft sinnvoll, den Reinigungsfortschritt sowie die ermittelten Spektren in Abhängigkeit von der abgelaufenen Reinigungszeit zu dokumentieren.

Eine Dokumentation kann beispielsweise erfolgen, indem die Oberfläche des Werkstückes während der Reinigung optisch überwacht wird. Dies hat den Vorteil, dass die optische Überwachung in der Reinigungskammer ebenso wie die Ermittlung der Spektren in der Analysekammer ohne eine Unterbrechung des Reinigungsprozesses erfolgen kann, so dass einerseits der Reinigungsprozess vorteilhaft durch die Analyse nicht gestört wird und andererseits durch die Überwachung keine Zeitverzögerungen im Prozessablauf bewirkt werden.

Eine andere Möglichkeit den Reinigungsfortschritt zu erfassen, besteht darin, dass während des Reinigungsprozesses in Abständen Werkstückproben entnommen werden. Das Werkstück sollte hierzu sinnvollerweise bereits zu Beginn der Reinigung mehrteilig sein, damit während des Reinigungsprozesses mehrere Proben entnommen werden können. Wird für die Entnahme der Probe eine Schleuse vorgesehen, so kann die Probenentnahme vorteilhaft ohne Unterbrechung des Reinigungsprozesses erfolgen. Eine andere Möglichkeit besteht darin, die Proben innerhalb der Reinigungskammer lediglich aus dem Wirkungsbereich der reaktiven Atmosphäre zu entfernen, so dass der Reinigungsprozess gestoppt wird. Nach Abschluss des Reinigungsprozesses können dann alle Werkstückproben gemeinsam ausgewertet werden.

Eine Probenentnahme kann beispielsweise immer dann erfolgen, wenn charakteristische Änderungen bei der Aufnahme der Spektren eintreten (beispielsweise das Verschwinden einer bestimmten Spektrallinie). So kann dieses Ereignis direkt mit dem Reinigungsfortschritt auf der entsprechenden Werkstückprobe korreliert werden. Besondere Aufmerksamkeit kann dabei den durch Sauerstoff und Kohlenstoff entstehenden Spektrallinien gewidmet werden, da ein Verschwinden dieser Linien als Hinweis gewertet werden kann, dass Carbonat- und Oxidverbindungen vollständig abgebaut sind.

Vorteilhaft kann die Korrelation des Reinigungsfortschrittes mit der Veränderung der ermittelten Spektren auch genutzt werden, um über das Ereignis der erfolgreichen Reinigung hinaus Erkenntnisse über den Reinigungsprozess zu gewinnen. Beispielsweise können bestimmte Spektrallinien zum Nachweis bestimmter Verunreinigungen verwendet werden, wodurch eine Anpassung der Prozessparameter zur Optimierung des Reinigungsprozesses möglich wird. Es lassen sich damit also vorteilhaft Erfahrungswerte gewinnen, die eine Optimierung der Reinigungsprozesse ermöglichen, so dass nicht nur die notwendige Reinigungszeit genau ermittelt sondern auch verkürzt werden kann.

Sind die für die Beurteilung des Reinigungsprozesses relevanten Anteile des Spektrums einmal ermittelt worden, so kann das Verfahren gemäß einer besonderen Ausgestaltung der Erfindung derart durchgeführt werden, dass die spektrometrische Analyse unter Anwendung eines Korrelationsfilters durchgeführt wird, mit dem eine Korrelation zwischen dem von Korrosionsprodukten befreiten Werkstück und einer für die vollständige Entfernung der Korrosionsprodukte charakteristischen Veränderung des jeweils ermittelten Spektrums selektiert wird. Durch Einsatz eines Korrelationsfilters ist es vorteilhaft möglich, die für die Bewertung des Reinigungsprozesses relevanten Anteile des Spektrums stärker zu gewichten, so dass aus deren Ermittlung einfache Maßnahmen zur Prozesssteuerung abgeleitet werden können. Insbesondere kann die für den Abschluss des Reinigungsverfahrens notwendige Bedingung leichter ermittelt werden. Diese kann manuell oder auch automatisch zur Unterbrechung des Reinigungsverfahrens herangezogen werden.

Gemäß einer Ausgestaltung des Korrelationsfilters kann dieser lediglich eine Bandbreite des Spektrums durchlassen, in der sich die charakteristische Änderung abspielt. Der Filter kann beispielsweise aus einem Gitterfilter bestehen, der lediglich die optisch zu bewertende Bandbreite durchlässt und beispielsweise als eine Art Fenster in der Wand der Reinigungskammer ausgeführt ist. Der Einsatz eines solchen Korrelationsfilters ist vorteilhaft sehr kostengünstig, wobei auch die auszuwertende Datenmenge verringert wird, so dass auch die Auswertungselektronik vorteilhaft kostengünstig eine geringere Kapazität benötigt.

Weiterhin ist es selbstverständlich auch möglich, dass zur Korrelationsfilterung das ermittelte Spektrum einer elektronischen Datenverarbeitung unterzogen wird (beispielsweise Fourier-Transformation). Hierdurch wird das ermittelte Analyseergebnis jeweils in einer Art und Weise aufbereitet, dass die charakteristische Änderung des Spektrums stärker zu Tage tritt.

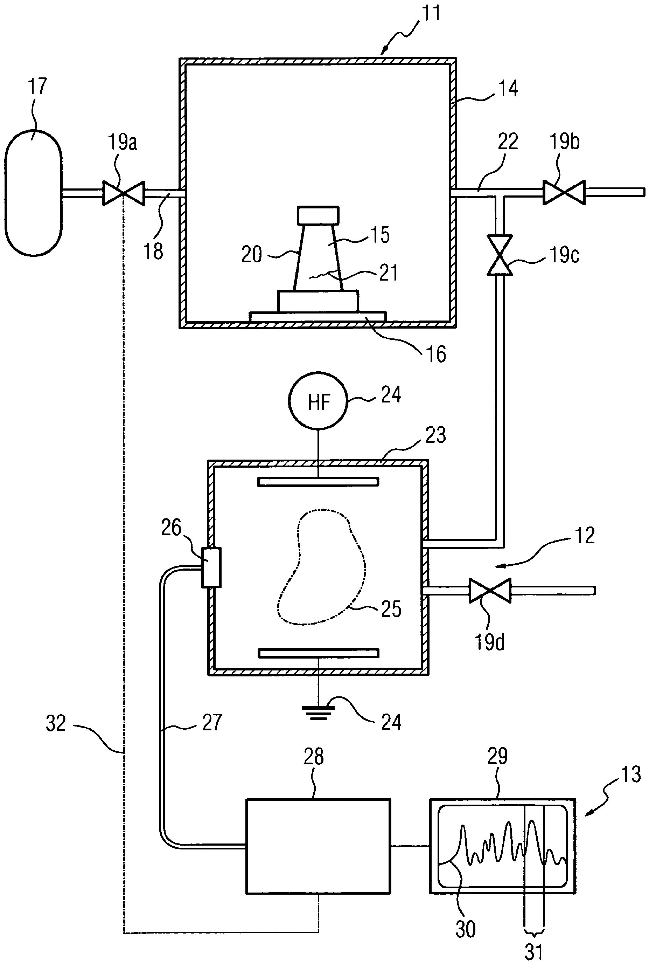

Weitere Einzelheiten der Erfindung werden im Folgenden anhand der Zeichnung beschrieben. Die einzige Figur zeigt schematisch den Aufbau eines Ausführungsbeispiels der erfindungsgemäßen Reinigungsvorrichtung, welche zur Durchführung eines Ausführungsbeispiels des erfindungsgemäßen Verfahrens geeignet ist. Die Durchführung des Ausführungsbeispiels des erfindungsgemäßen Verfahrens soll anhand der dargestellten Vorrichtung erfolgen.

Gemäß der Figur ist eine Reinigungsvorrichtung 11 vorgesehen, an die eine Analysezelle 12 für das in der Reinigungsvorrichtung 11 zum Einsatz kommende Prozessgas angeschlossen ist, wobei die Analysezelle 12 mit einer Auswertungseinrichtung 13 in Verbindung steht.

Die Reinigungsvorrichtung 11 weist eine Reinigungskammer 14 auf, in der ein Werkstück 15 in Form einer Turbinenschaufel in einer Aufnahme 16 platziert ist. Der Reinigungskammer 14 kann aus einem Vorratsbehälter 17 über eine Zuführung 18 durch Öffnen eines Ventils 19a ein Prozessgas zugeführt werden. Dieses enthält Halogenionen, insbesondere Fluorionen, die eine Oberfläche 20 des Werkstückes 15 inklusive einer inneren Oberfläche von eventuell im Werkstück befindlichen Rissen 21 von Korrosionsprodukten und eventuellen Rückständen von Beschichtungen befreit. Das kontaminierte Prozessgas wird anschließend über eine Abführung 22 durch Öffnen eines Ventils 19b aus der Reinigungskammer 14 entfernt.

Der Reinigungsprozess ist lediglich schematisch dargestellt. Anstelle des Vorratsbehälters 17 können auch mehrere Vorratsbehälter angeordnet werden, wobei die Mischung durch geeignete nicht dargestellte Ventile vorgenommen wird. Weiterhin können nicht dargestellte Pumpen zur Förderung des Prozessgases beziehungsweise zur eventuellen Evakuierung der Reinigungskammer 14 vorgesehen werden. Außerdem kann vorteilhaft eine Heizung (nicht dargestellt) in der Reinigungskammer 14 angeordnet werden.

Das Prozessgas kann durch die Ventile 19a, 19b kontinuierlich zu- beziehungsweise abgeführt werden, wodurch in der Reinigungskammer 14 ein ständiger Umsatz an Prozessgas bewirkt wird. Dabei können die Ventile 19a, 19b als Drosseln zum Einsatz kommen. Eine andere Möglichkeit ist eine diskontinuierliche Zu- beziehungsweise Abführung von Prozessgas. Dabei werden die Ventile 19a, 19b im Wechsel geöffnet und geschlossen, wobei ein quasi-kontinuierlicher Reinigungsprozess entsteht. In regelmäßigen Abständen kann durch Öffnen eines Ventils 19c der Abführung 22 kontaminiertes Prozessgas entnommen und einer Kammer 23 der Analysezelle 12 zugeführt werden. Bei einem quasi-kontinuierlichen Verlauf des Reinigungsverfahrens kann Prozessgas immer dann entnommen werden, wenn das Ventil 19b zur Abführung des kontaminierten Prozessgases geöffnet ist. Damit ist eine Probenentnahme während des Ablaufes des Reinigungsverfahrens online möglich, ohne das Reinigungsverfahren selbst zu unterbrechen.

In der Kammer 23 wird mittels eines Plasmagenerators 24 ein Plasma 25 in dem in der Kammer 23 befindlichen Prozessgas gezündet. Dieses strahlt elektromagnetische Strahlung ab, die durch eine Art Fenster 26, welches eine Schnittstelle für die emissionsspektrometrische Untersuchung bildet, in einen Lichtleiter 27 eingespeist werden kann. Dieser leitet das Licht in einen Prozessor 28, in der eine Datenverarbeitung stattfinden kann, wobei das Analyseergebnis an einem Bildschirm 29 ausgegeben wird.

Das Fenster 26 kann beispielsweise aus einem Gitterfilter bestehen, der als Korrelationsfilter derart eingesetzt wird, dass nur für die Untersuchung wesentliche Wellenlängenbereiche der Plasmaemissionen durchgelassen werden. Das Fenster ist zum Innenraum der Kammer 23 hin mit einer diamantartigen Schutzbeschichtung versehen, damit dieses durch die Reaktivität des Plasmas nicht in Mitleidenschaft gezogen wird.

In einem auf dem Bildschirm 29 dargestellten Emissionsspektrum 30 ist schematisch ein charakteristischer Bereich 31 dargestellt, der sich bei Abschluss des Reinigungsprozesses charakteristisch verändert und so als Entscheidungskriterium für eine Beendigung des Reinigungsprozesses verwendet wird. Die Auswertungseinrichtung sendet über eine Steuerleitung 32 ein Signal an das Ventil 19a, welches zur Beendung des Reinigungsvorganges geschlossen wird. In nicht dargestellter Weise kann die Auswertungsvorrichtung auch weitere Steuerleitungen zu den Ventilen 19b und 19c beziehungsweise zum Abführen des analysierten Prozessgases auch zu einem Ventil 19d haben. Diese Funktionalität kann jedoch auch in einer nicht dargestellten gesonderten Steuereinrichtung umgesetzt werden.

## Patentansprüche

1. Verfahren zum Reinigen von Werkstücken (15) von lKorrosionsprodukten in einer reaktiven Atmosphäre mit Halogenionen, bei dem die Werkstücke (15) in einer Reinigungskammer (14) einem die Halogenionen enthaltenden Prozessgas ausgesetzt werden, wobei
- das Prozessgas kontinuierlich oder in Zeitintervallen der Reinigungskammer (14) zugeführt und entnommen wird,
- zumindest ein Teil des entnommenen Prozessgases einer Analysezelle (12) zugeführt wird,
- in der Analysezelle mit vorgegebenen Prozessparametern ein Plasma in dem Prozessgas gezündet wird und
- das Plasma spektrometrisch analysiert wird,
**dadurch gekennzeichnet, dass**
- eine Veränderung des ermittelten Spektrums des Prozessgases mit dem Fortschritt bei der Reinigung eines der Werkstücke (15) korreliert wird, indem sowohl der zeitliche Verlauf der Änderungen des ermittelten Spektrums als auch der an der Oberfläche und/oder in Rissen in der Oberfläche eines der Werkstücke (15) ablaufende Reinigungsprozess überwacht wird,
- dann diese Korrelation herangezogen wird, um Charakteristika in den ermittelten Spektren aufzufinden, die einen erfolgreichen Abschluss des Reinigungsvorgangs signalisieren und
- der Reinigungsprozess an den Werkstücken jeweils so lange fortgeführt wird, bis aufgrund des Fehlens der Spektrallinien der charakteristischen Reinigungsprodukte auf eine vollständige Säuberung des Werkstücks geschlossen werden kann und der Reinigungsprozess dann abgebrochen wird, wobei es sich bei den Werkstücken um Turbinenschaufeln handelt.

2. Verfahren nach Anspruch 1,
**dadurch gekennzeichnet dass** die Oberfläche des Werkstückes (15) während der Reinigung optisch überwacht wird.

3. Verfahren nach einem der Ansprüche 1 oder 2,
**dadurch gekennzeichnet, dass** während des Reinigungprozesses in Abständen Werkstückproben entnommen werden.

4. Verfahren nach Anspruch 1,
**dadurch gekennzeichnet, dass** in den folgenden Reinigungsschritten die spektrometrische Analyse unter Anwendung eines Korrelationsfilters durchgeführt wird, mit dem eine Korrelation zwischen dem von Korrosionsprodukten befreiten Werkstück (15) und der für die vollständige Entfernung der Korrosionsprodukte charakteristischen Veränderung des jeweils ermittelten Spektrums selektiert wird.

5. Verfahren nach Anspruch 4,
**dadurch gekennzeichnet, dass** der Korrelationsfilter eine Bandbreite des Spektrums durchlässt, in der sich die charakteristische Änderung abspielt.

6. Verfahren nach Anspruch 4,
**dadurch gekennzeichnet, dass** zur Korrelationsfilterung das ermittelte Spektrum einer elektronischen Datenverarbeitung unterzogen wird.

7. Verfahren nach einem der Ansprüche 4 bis 6,
**dadurch gekennzeichnet, dass** bei Ermittlung der charakteristischen Veränderung des Spektrums der Reinigungsprozess automatisch beendet wird.

## Claims

1. Method for cleaning workpieces (15) of corrosion products in a reactive atmosphere with halogen ions, in which the workpieces (15) are exposed to a process gas containing the halogen ions in a cleaning chamber (14), wherein
- the process gas is fed to and removed from the cleaning chamber (14) continuously or at time intervals,
- at least some of the process gas removed is fed to an analysis cell (12),
- in the analysis cell, a plasma is ignited in the process gas with prescribed process parameters and
- the plasma is spectrometrically analysed,
**characterized in that**
- a change of the determined spectrum of the process gas is correlated with the progress in the cleaning of one of the workpieces (15), **in that** both the variation over time of the changes of the determined spectrum and the cleaning process proceeding on the surface and/or in cracks in the surface of one of the workpieces (15) are monitored,
- then this correlation is used to find characteristics in the determined spectra that signal a successful completion of the cleaning operation, and
- the cleaning process on the workpieces is continued in each case until complete cleaning of the workpiece can be concluded from the absence of spectral lines of the characteristic cleaning products and the cleaning process is then terminated, the workpieces being turbine blades.

2. Method according to Claim 1, **characterized in that** the surface of the workpiece (15) is monitored optically during the cleaning.

3. Method according to either of Claims 1 and 2, **characterized in that** workpiece samples are taken at intervals during the cleaning process.

4. Method according to Claim 1, **characterized in that**, in the subsequent cleaning steps, the spectrometric analysis is carried out using a correlation filter, with which a correlation between the workpiece (15) freed of corrosion products and the change of the respectively determined spectrum that is characteristic of the complete removal of the corrosion products is selected.

5. Method according to Claim 4, **characterized in that** the correlation filter allows through a bandwidth of the spectrum in which the characteristic change takes place.

6. Method according to Claim 4, **characterized in that**, for the correlation filtering, the determined spectrum is subjected to electronic data processing.

7. Method according to one of Claims 4 to 6, **characterized in that**, when the characteristic change of the spectrum is determined, the cleaning process is automatically ended.

## Revendications

1. Procédé pour débarrasser des pièces ( 15 ) de produit de corrosion dans une atmosphère réactive ayant des ions halogène, dans lequel on soumet les pièces ( 15 ) dans une chambre ( 14 ) de nettoyage à un gaz de processus contenant des ions halogène, dans lequel
- on envoie le gaz de processus en continu ou par intervalle de temps à la chambre ( 14 ) de nettoyage et on l'en prélève,
- on envoie au moins une partie du gaz de processus prélevé à une cellule ( 12 ) d'analyse,
- on amorce dans la cellule d'analyse un plasma dans le gaz de processus avec des paramètres de processus prescrits et
- on analyse spectrométriquement le plasma,
**caractérisé en ce que**
- on met une modification du spectre déterminé du gaz de processus en corrélation avec la progression du nettoyage de l'une des pièces ( 15 ), en contrôlant à la fois la variation dans le temps des modifications du spectre déterminé et le processus de nettoyage se déroulant à la surface et/ou dans des fissures de la surface de l'une des pièces ( 15 ),
- on tire ensuite parti de cette corrélation pour trouver dans les spectres déterminés des caractéristiques qui signalent la réussite de l'opération de nettoyage et
- on poursuit l'opération de nettoyage sur les pièces jusqu'à ce que l'on puisse déduire, sur la base de l'absence des raies spectrales des produits de nettoyage caractéristiques, que la pièce est complètement propre et on interrompt alors l'opération de nettoyage, les pièces étant des aubes de turbine.

2. Procédé suivant la revendication 1,
**caractérisé en ce que** l'on contrôle visuellement la surface de la pièce ( 15 ) pendant le nettoyage.

3. Procédé suivant l'une des revendications 1 ou 2,
**caractérisé en ce que** l'on retire des échantillons de pièces par intervalle pendant l'opération de nettoyage.

4. Procédé suivant la revendication 1,
**caractérisé en ce que**, dans les stades de nettoyage suivants, on effectue l'analyse spectrométrique en utilisant un filtre de corrélation, par lequel on sélectionne une corrélation entre la pièce ( 15 ) débarrassée de produit de corrosion et la modification du spectre déterminé respectivement caractéristique de l'enlèvement complet des produits de corrosion.

5. Procédé suivant la revendication 4,
**caractérisé en ce que** le filtre de corrélation est passant dans une largeur de bande du spectre, dans lequel se déroule la modification caractéristique.

6. Procédé suivant la revendication 4,
**caractérisé en ce que**, pour le filtrage de corrélation, on soumet le spectre déterminé à un traitement électronique de données.

7. Procédé suivant l'une des revendications 4 à 6,
**caractérisé en ce que**, lorsque la modification caractéristique du spectre est déterminée, il est mis fin automatiquement à l'opération de nettoyage.
